# EUROPEAN PATENT APPLICATION

(11) **EP 0 887 287 A1**
(43) Date of publication of application: **30.12.1998**
(21) Application number: 97110215.7
(22) Date of filing: 23.06.1997
(51) Int. Cl.: B65G 1/00, B65G 13/11, B65G 13/00, B65G 39/12, B65G 39/04

(54) **Roller tray for facilitating the movement of heavy objects**

(71) Applicant: Olstykke Smede- og MaskinFabrik APS, 2760 Malov (DK)
(72) Inventor: Jensen, Christian Reenberg, 2400 Kobenhavn NV (DK)
(74) Representative: Roerboel, Leif

(57) **Abstract**

In a roller tray (3) with rollers (4) rotatably supported above a base (8),
the main novel feature is
that the rollers (4) are supported on stationary shafts (5) resting in recesses (5) on upstanding webs (7) and held in position by engagement with channels (9) in end pieces (10), temporary elastic bending of the base (8) and/or the shafts (5) being necessary to assemble the complete tray (3).

With this arrangement, no screws or other fasteners are needed. The tray (3) may be used on its own as a trolley (turned upside-down) to support heavy objects to be moved, or else in a great number of trays secured to a roller mat (not shown), that may be flexible.

## Description

### TECHNICAL FIELD

The present invention relates to a roller tray of the kind set forth in the preamble of claim 1.

### BACKGROUND ART

Roller trays of the kind referred to above are either used individually, e.g. for supporting relatively long objects, such as beams or poles, when being moved in their own longitudinal direction, or else in greater numbers forming a so-called roller mat for supporting more compact heavy objects, such as boxes, suitcases or the like, along a predetermined path.

Roller trays having been used for the above-mentioned purposes up to the present are normally assembled using fasteners such as screws or bolts. For this reason, the assembly work is time-consuming and hence costly, and the use of screws or bolts entails a risk of the various parts coming loose due to vibrations or load variations. This is especially a drawback in the case of roller mats, as these usually comprise a great number of roller trays, with a correspondingly statistically increased risk of screws or bolts coming loose.

### DISCLOSURE OF THE INVENTION

It is the object of the present invention to provide a roller tray of the kind referred to above, that is extremely reliable in operation and consists of an absolute minimum of parts, and this object is achieved with a roller tray of said kind, according to the present invention also comprising the features set forth in the characterizing clause of claim 1. With this arrangement, no screws or other fasteners are required, hence eliminating both the cost of using such fasteners and the risk of the fasteners coming loose.

Advantageous embodiments of the roller tray according to the present invention, the effects of which - beyond what is obvious - will be evident from the following detailed part of the present description, are set forth in claims 2-7.

### BRIEF DESCRIPTION OF THE DRAWINGS

In the following detailed part of the present description, the invention will be explained in more detail with reference to the exemplary embodiment of a roller tray according to the invention shown in the drawings, in which
- Figure 1: is a perspective view of a roller mat in a flexed condition,
- Figure 2: is a perspective view of a roller tray that may be used as a component of the roller mat shown in Figure 1, and
- Figure 3: is a side view showing the interconnected ends of two roller mats placed in continuation of each other.

### DESCRIPTION OF THE PREFERRED EMBODIMENTS

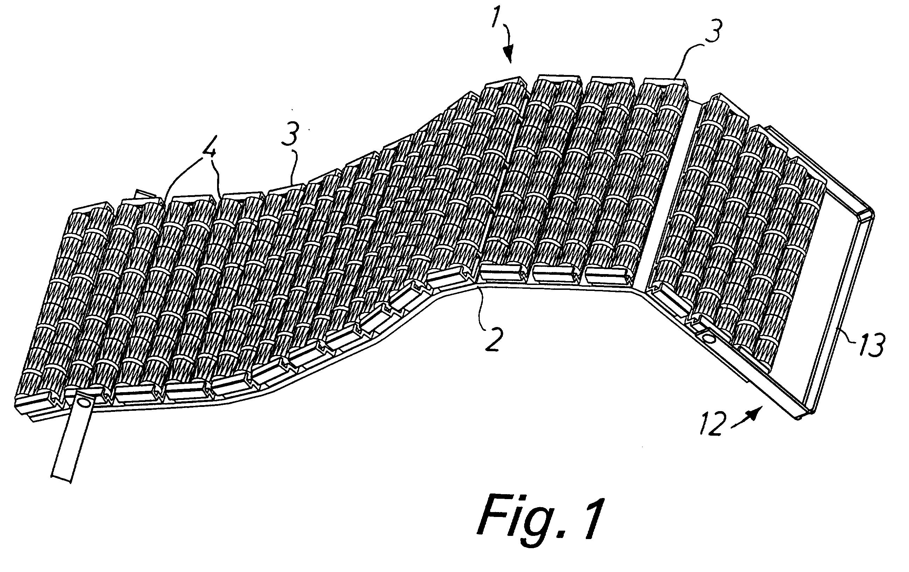

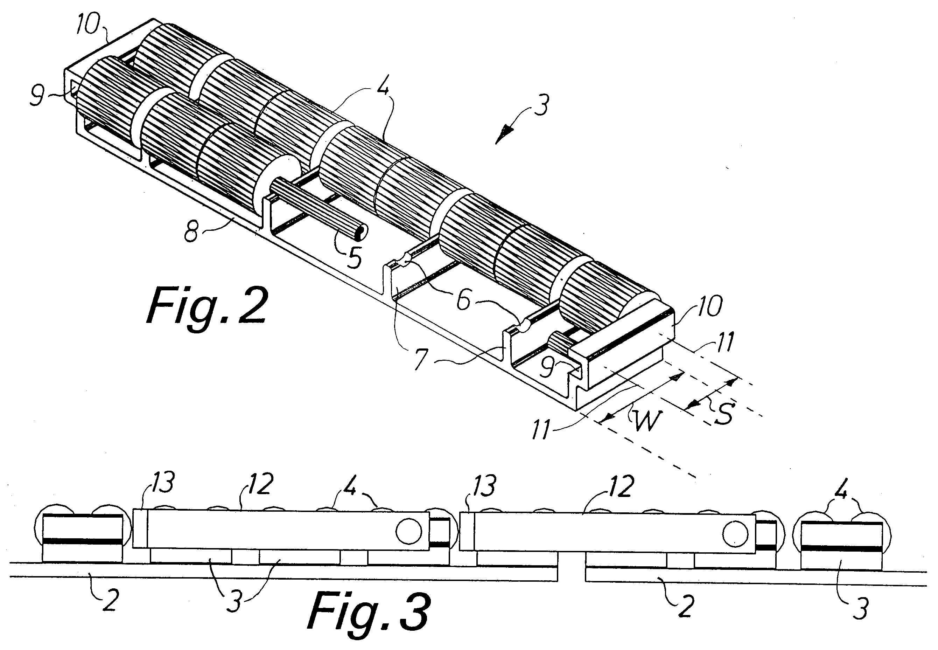

The roller mat 1 shown in Figures 1 and 3 consists mainly of a flexible base sheet 2 of rubber or rubber-like material, on which is secured a number of roller trays 3, each in the embodiment shown comprising two sets of rollers 4. In the embodiment shown, the rollers 4 are freely rotatably supported on two shafts 5, cf. Figure 2, non-rotatably supported in the roller tray 3 by resting in recesses 6 formed in the top edges of supporting webs 7 protruding upwardly from a roller-tray base 8. The ends of the shafts are received in channels 9 formed in end pieces 10 likewise protruding upwardly from the base 8. The lower side of each channel 9 lies in a plane through the bottoms of the recesses 6, while the upper side is spaced from the lower side by a distance equal to the diameter of the shafts 5.

With the arrangement of the roller tray 3 shown in Figure 2, it is possible to use shafts 5 of a constant diameter (e.g. cut from stock) and assemble the roller tray 3 as follows:
1) insert the appropriate number of rollers 4 on a shaft 5 outside of the roller tray 3,
2) hold the shaft slanting and skewing slightly upwards and outwards from one end and insert that end into a channel 9,
3) swing the opposite end downwards and inwards while distributing the rollers 4 in the spaces between the end pieces 10 and the supporting webs 7 and the spaces between the latter, and
4) finally, force the free end of the shaft 5 into the channel 9 in the opposite end piece 10, until the shaft 5 clicks into the recesses 6 - this will, of course, entail temporary elastic bending of the base 8 and/or the shaft 5.

As will be evident, no bolts, nuts or other loose fasteners are needed.

Each roller tray 3 may be secured to the base sheet 2 in various ways, such as by using screws, rivets or wires in "stitches", but in the preferred embodiment the roller trays 3 are secured to the base sheet 2 by a vulcanizing process or a similar process creating a continuous bond between the lower surfaces of the roller-tray bases 8 and the upper surface of the base sheet 2.

To make it possible to flex the roller mat 1 in both directions, i.e. with the concave side above or below, the roller trays 3 are spaced in the manner shown in Figure 1, allowing the roller mat 1 to be flexed within limits with an upward concavity. The roller trays 3 will obviously not interfere with any flexing in the opposite direction.

The part of the roller trays 3 consisting of the base 8, the supporting webs 7 and the end pieces 10 is preferably manufactured by extruding a suitable metal, such as aluminium or an aluminium alloy, through a suitable die, after which the extruded material is cut into pieces of the correct size, the final step being the forming of the recesses 6, such as by milling with a rotary cutter.

The shafts 5 are preferably made from stainless steel or other non-corroding metal of high strength, while the rollers 4 are preferably made from polyamide ("nylon").

As will be evident from Figure 2, the width W of the base 8 is substantially greater than the distance S between the axes 11 of the shafts 5 (only one of which is visible in this Figure). This provides for stability in the rolling directions (transversely to the length direction of the roller tray 3), because "toppling" is prevented, partly by the wide supporting base providing gravitational stability, partly by the large area of adhesion between the roller-tray base 8 and the base sheet 2.

In many cases, one roller mat 1 is not sufficient to cover the length of the path, through which goods (boxes or luggage) are to be conveyed. For this reason, the roller mat is equipped with a coupling brace 12 comprising a coupling rod 13 capable of being placed between two roller trays on an adjoining roller mat placed in continuation of the roller mat 1 as shown in Figure 3, thus preventing the two mats from coming apart when subjected to loads. Other coupling means, such as hooks cooperating with studs, may also be used, and the coupling means may also be used for connecting the roller mat 1 to e.g. a conveyor, a chute or some other structural part.

In the embodiment shown, the roller mat 1 is straight as viewed at right angles to the shafts 5, for which reason it can only be used for moving goods in substantially straight-line motion, at least as viewed from above. In a further embodiment, that is not shown in the drawing but can readily be imagined and constructed by a skilled person, the roller mat is curved in its own plane, making it possible to convey goods along a curved path. In this embodiment, the roller trays can be angularly distributed to match the curvature of the path, and if the distance between the roller trays in the "outer lanes" is too great for smooth operation, short auxiliary roller trays may be placed to bridge the spaces concerned, naturally with the rollers at a suitable intermediate angle.

To reduce the risk of edge fissures spreading through the base sheet 2, the latter may be reinforced in a suitable manner, such as having a flexible metal wire mesh embedded in it.

It should be noted that - due to the resiliency of the roller-tray bases 8 and/or of the shafts 5, as well as the flexibility of the base sheet 2 - the shafts 5 with the rollers 4 may be removed singly by first flexing the base sheet 2 along the nearest edge of the roller tray 3 concerned to increase the space between the roller trays, vide the space between the third and the fourth roller tray from the right in Figure 1, and then carrying out the steps 1-4 described above in the opposite sense and order, after which a replacement shaft or the same shaft with one or more replacement rollers may be placed in position by carrying out said steps 1-4 in the normal order, finally flexing the base sheet 2 back to its previous shape - bent or straight.

As is also the case with certain previously known roller mats and roller trays, both the roller mat 1 and the roller tray 3 as described above may be placed upside-down and used as a cart or trolley for moving heavy goods or furniture. The roller tray 3 may, of course, also be used singly with the rollers facing upwardly to facilitate movement of heavy goods or furniture or long objects, such as beams, e.g. across a threshold, or else in a small number distributed on a floor or other surface for successively supporting such articles, the trays having been passed being moved up in front.

### LIST OF PARTS

- 1: roller mat
- 2: base sheet
- 3: roller tray
- 4: roller
- 5: shaft
- 6: recess
- 7: supporting web
- 8: roller-tray base
- 9: channel
- 10: end piece
- 11: axis
- 12: coupling brace
- 13: coupling rod
- S: distance
- W: width

## Claims

1. Roller tray (3) of the kind comprising
a) a roller-tray base (8), and
b) at least one roller (4) supported for rotation about an axis (11) substantially parallel to said base (8),
characterized in
c) that for each said axis (11) there is a stationary shaft (5) rotatably supporting at least two rollers (4),
d) that in a space between two rollers (4), each said shaft (5) is supported in a recess (6) in a supporting web (7) secured to or integral with said base (8) and protruding upwardly therefrom,
e) that at each end, each said shaft (5) is supported against forces directed towards and away from said base (8).

2. Roller tray (3) according to claim 1, characterized in that at each end, each said shaft (5) is engaged in a channel (9) formed in an end piece (10) secured to or integral with said base (8) in a manner providing the support set forth in item e of claim 1.

3. Roller tray (3) according to claim 2, characterized in that said base (8), said supporting web or webs (7) and said end pieces (10) are formed by being extruded together and cut to the correct length, after which said recess or recesses (6) is/are formed by a suitable process, such as milling with a milling cutter.

4. Roller tray (3) according to any one or any of the claims 1-3, characterized in that the distance between each end piece (10) and the nearest supporting web (7) is substantially less than, preferably approximately one-half of, the distance(s) between the supporting webs (7), said distances being measured in the axial direction of said shaft(s) (5).

5. Roller tray (3) according to any one or any of the claims 1-4, characterized by having
a) sixteen rollers (4) divided on two shafts (5), and
b) four supporting webs (7), whereas
c) on each shaft (5) there is one roller (4) between each end piece (10) and the nearest supporting web (7), and two rollers (4) in each of the spaces between the supporting webs (7).

6. Roller tray (3) according to any one or any of the claims 1-5, characterized in that the height of the axes (11) of said shafts (5) above the upper face of said base (8) is not greater than necessary for creating a sufficient operating clearance between said rollers (4) and said base (8).

7. Roller tray (3) according to any one or any of the claims 1-6, characterized in that it comprises at least two sets of rollers (4), the rollers of each set being spaced in the conveying direction from the rollers in the other set or sets, said base (8) having a width (W) in the conveying direction substantially greater than the distance (S) between the axes (11) of said sets of rollers (4).
